# EUROPEAN PATENT APPLICATION

(11) **EP 1 486 917 A2**
(43) Date of publication of application: **15.12.2004**
(21) Application number: 04252291.2
(22) Date of filing: 19.04.2004
(51) Int. Cl.: G06T 5/50

(54) **Medical image processing system and method**

(30) Priority: 24.04.2003 JP 2003119895
(71) Applicant: Konica Minolta Medical & Graphic Inc., Tokyo 163-0512 (JP)
(72) Inventor: Yamamichi, Youji Konica Minolta Med.& Graph.,Inc., Tokyo, 192-8505 (JP)
(74) Representative: Rees, Alexander Ellison

(57) **Abstract**

A medical image processing system for visualizing plural medical images of a subject in multi-format on a single plane on one of a film sheet and a screen, comprising: a radiographing section for radiographing the subject so as to generate plural sets of image information in which each set of image information includes medical image information and radiograph-related information related to at least one of the subject and the radiographing section; an extracting section for extracting plural sets of radiograph-related information from the plural sets of image information; a calculating section for conducting calculation for the plural sets of radiograph-related information so as to obtain new radiograph-related information; and a visualizing section for visualizing the plural sets of image information with the new radiograph-related information on the single image plane.

## Description

### FIELD OF THE INVENTION

The present invention relates to a medical image processing system for outputting the image information from a medical image diagnostic apparatus in multiformat.

### BACKGROUND OF THE INVENTION

The image information on the subject captured by a medical image diagnostic apparatus is often outputted to such a hardcopy as a film, which is then used for diagnosis. In this case, information on radiographing of the subject such as the name and ID of a patient and the date of radiographing is exposed on the film in the form of a character image, whereby correspondence between the image information and patient is maintained. In the meantime, hardcopy printing is sometimes utilized in the case of a multiformat type where multiple pieces of image information are arranged on a sheet of film for each frame.

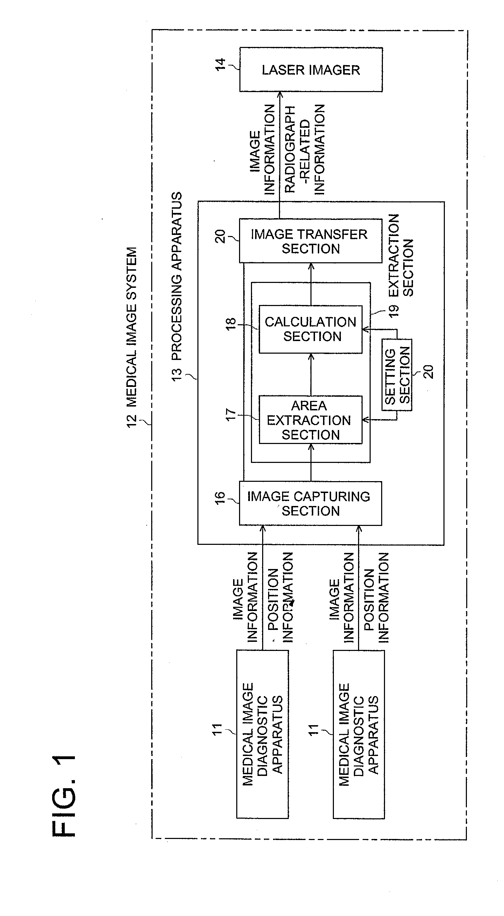

When image information is handled by a DICOM compatible apparatus, patient information is extracted from radiograph-related information can be easily written onto a film or shown on a display in the printing mode. If it is handled by an apparatus incompatible with DICOM, however, in order to extract patient information from image information, an OCR or similar equipment is used for character recognition, and the recognized name of the patient (character) is associated as radiograph-related information of this imager information to be sent to the imager or display as output equipment. (For example, Official Gazette of Japanese Application Patent Laid-Open Publication No. Hei 10-93814 (Figs. 1 through 3 on page 3).

### [Patent Document 1]

Official Gazette of Japanese Application Patent Laid-Open Publication No. H10-93814.

According to the prior art, however, it is necessary at the time of character recognition to register or set the characters to be recognized in advance. In other words, a character pattern consisting of a wide variety of character types to be registered or set in the dictionary part is required to be present at the time of character recognition character recognition is enabled only in the presence of this character pattern.

Especially the character image contained in the medical image information is likely to be mixed with the image information of a subject as a background. To distinguish the character image from such image information of the subject as a background, special character types such as shaded characters or reversed characters are sometimes used. In a country where language other Japanese is used, the character pattern of the language of that country must be used, and a dictionary part inherent to that country must be created, according to the prior art. To ensure appropriate character recognition under these various conditions, a great number of man hours are required and the work itself is not easy. Further, if appropriate character recognition has failed, incorrect radiograph-related information will be provided.

For the reasons stated above, it is important to find out how to provide a medical image processing system that allows easy and accurate extraction of radiograph-related information consisting of character images, independently of character type.

The present invention has been made to solve the problems involved in the prior art. Thus, the object of the present invention is to provide a medical image processing system that allows easy and accurate extraction of radiograph-related information consisting of character images, independently of character type.

### SUMMARY OF THE INVENTION

To solve the problems and to achieve the object, the medical image processing system of the present invention is:
(1) a medical image processing system that receives and visualizes the image information containing:
   medical image information obtained by the radiographing; and
   radiograph-related information related to at least one of the subject and radiographing, from a medical image radiographing apparatus;
   wherein the medical image processing system is further characterized by comprising:
   an extracting section for extracting the radiograph-related information from the image information; and
   a visualization section for enlarging and visualizing the extracted radiograph-related information.

   According to the present invention described in (1), radiograph-related information is extracted from image information by the extracting section, and the extracted radiograph-related information is enlarged and visualized by the visualization section. This arrangement allows radiograph-related information to be displayed in an enlarged form without recourse to a means for character recognition, thereby ensuring easy identification by an operator.
   The medical image processing system of the present invention is characterized in that:
(2) the medical image radiographing apparatus has a position information generation section for generating the position information on the position of the radiograph-related information contained in the image information; and the extracting section extracts the radiograph-related information based on the position information.
   The present invention described in (2) permits efficient extraction of radiograph-related information from a specific area if the image information specified by the medical image radiographing apparatus.
   The medical image processing system of the present invention is characterized in that:
(3) the extracting section has a position information specification section for specifying the position information on the position of the radiograph-related information contained in the image information, and extracts the radiograph-related information based on the specified position information.
   The present invention described in (3) ensures efficient extraction of radiograph-related information from the specific area of the image information specified by the extracting section.
   The medical image processing system of the present invention is characterized in that:
(4) the medical image processing system has a setting section for setting the layout position for enlargement and visualization.
   According to the present invention described in (4), the medical image processing system uses a setting section to set the layout position for enlarging and visualizing radiograph-related information. This arrangement ensures that radiograph-related information of easy-to-see size is displayed at the clearly visible position.
   The medical image processing system of the present invention is:
(5) a medical image processing system that receives and visualizes the image information containing:
   medical image information obtained by the radiographing; and
   radiograph-related information related to at least one of the subject and radiographing, from a medical image radiographing apparatus;
   wherein multiple pieces of the image information obtained by radiographing the same subject from the medical image radiographing apparatus are outputted and visualized in multiformat on a single film or single display screen;
   the medical image processing system further characterized by comprising:
   an extracting section for extracting the radiograph-related information from multiple pieces of the image information;
   a calculating section for calculating the multiple pieces of the extracted radiograph-related information to obtain new radiograph-related information; and
   a visualization section for enlarging the new radiograph-related information to output it at a specified position on a single film or single display screen.

   The invention described in (5) uses an extracting section to extract the radiograph-related information from multiple pieces of the image information; employs a calculating section to compute the multiple pieces of the extracted radiograph-related information to obtain new radiograph-related information; and utilizes a visualization section to enlarge the new radiograph-related information to output it at a specified position on a single film or single display screen. This arrangement makes it possible to extract new radiograph-related information least affected by noise or background image, without recourse to a method for character recognition using character dictionary or the like for radiograph-related information. This, in turn, allows the new radiograph-related information to be displayed in an enlarge form, thereby ensuring easy identification by the operator.
   The medical image processing system of the present invention is characterized in that:
(6) the medical image radiographing apparatus has a position information generation section for generating the position information on the position of the radiograph-related information contained in the image information, and the extracting section extracts the radiograph-related information based on the position information.
   The invention described in (6) ensures efficient extraction of radiograph-related information from the specified area of the image information specified by the medical image radiographing apparatus.
   The medical image processing system of the present invention is characterized in that:
(7) the extracting section has a position information specification section for specifying the position information on the position of the radiograph-related information contained in the image information and extracts the radiograph-related information based on the specified position information.
   The invention described in (7) ensures efficient extraction of the radiograph-related information from the specific area of the image information specified by the extracting section.
   The medical image processing system of the present invention is characterized in that:
(8) the medical image processing system has a setting section for setting the layout position for enlargement and visualization of the radiograph-related information.
   The invention described in (8) uses a setting section to set the layout position for enlargement and visualization of the radiograph-related information. This arrangement allows radiograph-related information of an easy-to-see size to be displayed a clearly visible position.
   The medical image processing system of the present invention is characterized in that:
(9) the medical image processing system divides the pixels in the area where the radiograph-related information is present.
   The invention described in (9) permits high-precision acquisition of radiograph-related information by improving the resolution of the area where the radiograph-related information is present.
   The medical image processing system of the present invention is characterized in that:
(10) the calculation is integration of the pixels at the same position pertaining to multiple pieces of radiograph-related information extracted in the step.
   The invention described in (10) uses the calculation of integration to enhance the radiograph-related information commonly contained in image information and to reduce the noise or background image not commonly contained in image information.
   The medical image processing system of the present invention is characterized in that:
(11) the calculation applies processing of averaging based on the numeral of the integration, subsequent to the integration.
   The present invention described in (11) uses the method of averaging to reduce the influence of the noise and other factors contained in the specific radiograph-related information in multiple pieces of radiograph-related information.
   The medical image processing system of the present invention is characterized in that:
(12) the calculation applies processing of binarization subsequent to the integration.
   The present invention described in (12) uses the method of binarization to pick up only the binarized image portion from the enhanced radiograph-related information.
   The medical image processing system of the present invention is characterized in that:
(13) the extracting section utilizes the calculation of integration or binarized radiograph-related information as the new radiograph-related information.
   The present invention described in (13) reduces the noise or background image of the new radiograph-related information and improves its accuracy.
   The medical image processing system of the present invention is characterized in that:
(14) the calculation is the calculation of comparison to determine match or mismatch of pixels contained in the same position pertaining to multiple pieces of the extracted radiograph-related information.
   The present invention described in (14) uses calculation of comparison to determine match or mismatch of pixels. Thus, a match is found among the pixels containing common radiograph-related information while a mismatch is found among the pixels containing noise or background image. This makes it easy to differentiate between them.
   The medical image processing system of the present invention is characterized in that:
(15) the calculation of comparison applies the processing of comparing the pixels contained in the radiograph-related information in all combinations of multiple pieces of the extracted radiograph-related information.
   The present invention described in (15) applies comparison in all combinations of radiograph-related information. This arrangement permits the matched pixels to be counted for each mismatched pixel.
   The medical image processing system of the present invention is characterized in that:
(16) the all combinations involve:
   a step of selecting the first radiograph-related information from multiple pieces of the extracted radiograph-related information;
   a step of comparing pixels between the first radiograph-related information and the radiograph-related information other than first radiograph-related information;
   a step of selecting the second radiograph-related information from the second radiograph-related information and information other than the first radiograph-related information;
   a step of comparing pixels between this information and the radiograph-related information other than the first and second radiograph-related information;
   a step of selecting N-th radiograph-related information from the radiograph-related information other than the first and N-1-th radiograph-related information, wherein N is assumed as a parameter of natural number in excess of 2; and
   a step of comparing pixels between this information and the radiograph-related information other than 1st through N-th radiograph-related information in sequentially repeatedly until N-1 becomes equal to the number of the radiograph-related information items.

   The present invention described in (16) allows all possible combinations of radiograph-related information items to be implemented exhaustively with high efficiency.
   The medical image processing system of the present invention is characterized in that:
(17) comparison using the N-th radiograph-related information is not carried out in the all combinations, if there is a match between the N-th radiograph-related information and N-1-th radiograph-related information.
   The present invention described in (17) allows all possible combinations of radiograph-related information items to be implemented quickly and efficiently without wasting time.
   The medical image processing system of the present invention is characterized in that:
(18) the extracting section ensures that the pixels containing the greatest number of matched pixels among the mismatched pixels as a result of the calculation of comparison are the pixels of the new radiograph-related information.
   According to the present invention described in (18), the pixels containing the greatest number of matched pixels among the mismatched pixels are the pixels of the new radiograph-related information. Thus, the pixels having the highest possibility of being contained commonly in multiple pieces of image information can be made the pixels of the new radiograph-related information.
   The medical image processing system of the present invention is characterized in that:
(19) the extracting section ensures that, when the number of the matched pixels has exceeded the threshold value, these pixels are those of the new radiograph-related information.
   The present invention described in (19) ensures that the pixels for getting new radiograph-related information can be determined out of the pixels that are easily matched, without comparison being made for all combinations of radiograph-related information.
   The medical image processing system of the present invention is characterized in that:
(20) a density reversing section is provided to reverse the density when the new radiograph-related information is to be outputted.
   The present invention described in (20) uses a density reversing section to reverse the density when the new radiograph-related information is to be outputted. This arrangement allows an operator to select an easy-to-see density in conformity to the status of display.
   The medical image processing system of the present invention is characterized in that:
(21) when the medical image processing system consists of an image radiographing apparatus for radiographing a subject and an imager for printing the radiographed medical image information on the film, this imager comprises the extracting section, calculation section and visualization section.
   According to the present invention described in (21), either the image processing apparatus or image outputting apparatus is provided with an extracting section. This arrangement ensures that the radiograph-related information commonly contained in the image information can be displayed on the recording medium where prints are outputted, accurately in the form that permits easy identification.
   The medical image processing system of the present invention is characterized in that:
(22) the imager is provided with the setting section and density reversing section.
   The present invention described in (22) ensures that radiograph-related information of easy-to-see size can be displayed at a conspicuous density at the clearly visible position of the recording medium without interfering the image information.
   The medical image processing system of the present invention is characterized in that:
(23) when the medical image processing system consists of an image radiographing apparatus for radiographing a subject, a processing apparatus for processing the medical image information radiographed in the step, and an imager for printing the processed medical image information on the film, this imager comprises the visualization section, and either the imager or processing apparatus is equipped with the extracting section, calculating section and setting section.
   According to the present invention described in (23), the imager has a visualization section, and either the imager or processing apparatus has an extracting section, computating section and setting section. This arrangement ensures that the radiograph-related information commonly contained in the image information can be displayed on the recording medium where prints are outputted, accurately in the form that permits easy identification.
   The medical image processing system of the present invention is characterized in that:
(24) either the imager or processing apparatus has the setting section and density reversing section.

According to the present invention described in (24), either the imager or processing apparatus is provided with a setting section and density reversing section. This arrangement ensures that radiograph-related information of easy-to-see size can be displayed at a conspicuous density at the clearly visible position of the recording medium without interfering the image information.

### BRIEF DESCRIPTION OF THE DRAWINGS

Fig. 1 is a diagram representing an overall configuration of a medical image processing system;
Fig. 2 is a flowchart representing the operation of an extracting section as first and second embodiments;
Fig. 3 is a diagram illustrating an example of image information to be inputted into the extracting section;
Fig. 4 is a diagram illustrating an example of multi-formatted image information;
Fig. 5 is a diagram illustrating a specified area containing the character images;
Fig. 6 is a flowchart representing the processing of calculation as an embodiment 1;
Fig. 7 is a flowchart representing the processing of calculation as an embodiment 2 (Part 1);
Fig. 8 is a flowchart representing the processing of calculation as an embodiment 2 (Part 2); and
Fig. 9 is a diagram schematically representing the processing of calculation as an embodiment 2.

### EMBODIMENT OF THE INVENTION

Referring to the accompanying drawings, the following describes the preferred embodiments of a medical image processing system of the present invention:

### (EMBODIMENT 1)

In the first place, an overall configuration of a medical image processing system will be described. Fig. 1 is a block diagram representing an overall configuration of a medical image processing system as the first embodiment of the present invention. The medical image processing system 12 contains a medical image diagnostic apparatus 11, a processing apparatus 13 and a laser imager 14 as a visualization section. The medical image diagnostic apparatus 11 is an image generation apparatus such as an X-ray computed tomography apparatus or magnetic resonance imaging apparatus (MRI). Here radiograph-related information such as the name, ID number and gender of a patient is included in the specified area of the generated image information as image information. The medical image diagnostic apparatus 11 can be equipped with a position information generation section (not illustrated). This arrangement allows the position information on the specified area to be sent to the processing apparatus 13.

The processing apparatus 13 applies processing of multi-formatting to the image information transferred from the medical image diagnostic apparatus 11, as required. The laser imager 14 constitutes a visualization section and receives image information from the processing apparatus 13, and outputs a hardcopy. The image information transferred from the medical image diagnostic apparatus 11 consists of two types of signals depending on the type of the apparatus; a digital signal and an analog (video) signal. The multiformat in the sense in which it is used here refers to the form where multiple pieces of image information are arranged for the frame of each print area, thereby showing whole at once.

The medical image processing system 12 refers to the system not compatible with DICOM. DICOM (Digital Imaging and Communications in Medicine) is a NEMA standard on medical image and communications developed by American Conference on Radiology (ACR) and the National Electrical Manufacturing Association (NEMA). According to this Standard, radiograph-related information on image information is encoded and is sent integral with image information.

In the DICOM-compatible system, therefore, the patient ID (character) can be easily identified from the information attached to the image information, and can be printed on the imager. In the system not compatible with DICOM shown on the medical image processing system 12, however, the radiograph-related information is sent to the laser imager 14 in the form contained in image information. The present invention to be described later does not require character recognition. It is especially effective in the system not compatible with DICOM.

The processing apparatus 13 contains an image capturing section 16, an extracting section 19, a setting section 15 and an image transfer section 20. The image capturing section 16 converts an analog signal carrying the image information into a digital signal and temporarily stores this digitalized image information. The radiograph-related information contained commonly in the image information is extracted from multiple pieces of image information stored in the image capturing section 16 by the extracting section 19, whereby new radiograph-related information is generated.

The setting section 15 consists of a keyboard and others, and sets the multiformat. It is also in charge of various settings on an area extracting section 17 and a calculating section 18. For example, it permits inputting of the position information representing the specified area of the radiograph-related information.

The extracting section 19 contains the area extracting section 17 for extracting the area where radiograph-related information in image information is present, and the calculating section 18 for performing calculation to extract new radiograph-related information from this area. Here the area extracting section 17 allows extraction of the area containing the radiograph-related information, based on the position information on the area containing the radiograph-related information, which is either transmitted from the medical image diagnostic apparatus 11 or is set by the setting section 15.

Based on the radiograph-related information from the area extracting section 17, the calculating section 18 extracts the information commonly contained in multiple pieces of image information multi-formatted, through calculation of the multiple pieces of radiograph-related information. It then provides easy and accurate extraction of the character image, for example, contained commonly in these pieces of radiograph-related information.

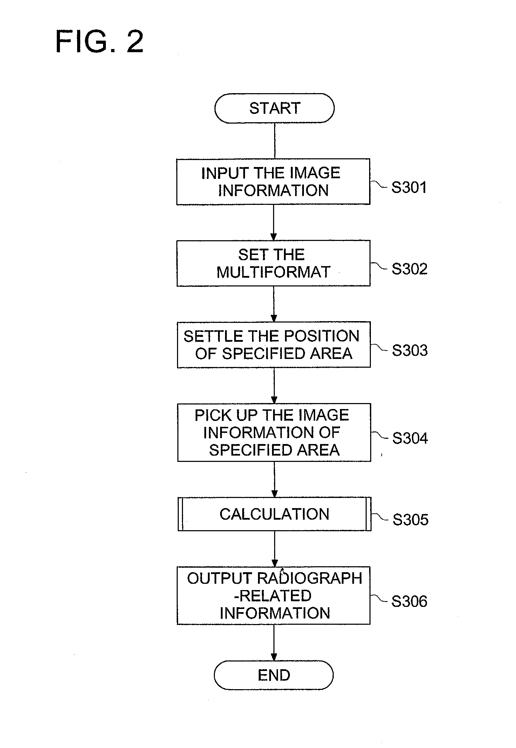

The following describes the operation of extracting the information (for example, radiograph-related information) commonly contained in multiple pieces of radiograph-related information carried out by the extracting section 19. Fig. 2 is a flowchart representing the operation of the extracting section 19. In the first place, the extracting section 19 acquires multiple pieces of image information (Step S301). These multiple pieces of image information are inputted from the medical image diagnostic apparatus 11 through the image capturing section 16.

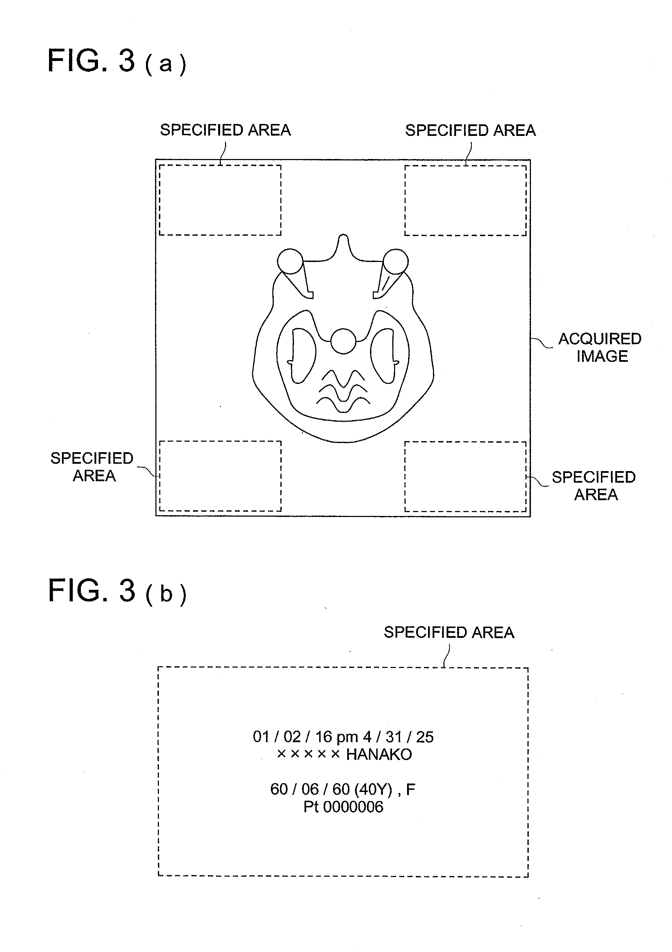

Fig. 3 (A) is a diagram illustrating an example of image information to be inputted into the extracting section 16. The tomographic image of a subject is located at the center of the image. Patient information or radiograph-related information such as radiographing conditions is inputted in the specified area with its peripheral portion specified as radiograph-related information. In this case, the specified area is approximately set at four corners of the acquired image having a low probability of tomographic image being present, and controlled so as not to overlap with the tomographic image.

Fig. 3 (B) is a diagram illustrating an example of radiograph-related information described in the specified area located at four corners of the acquired image. The specified area contains information on the date of radiographing, and the name, gender, age and ID number of the patient. Fig. 3 (B) shows a string of characters in the horizontal direction. This can be replaced by a string of characters in the vertical direction.

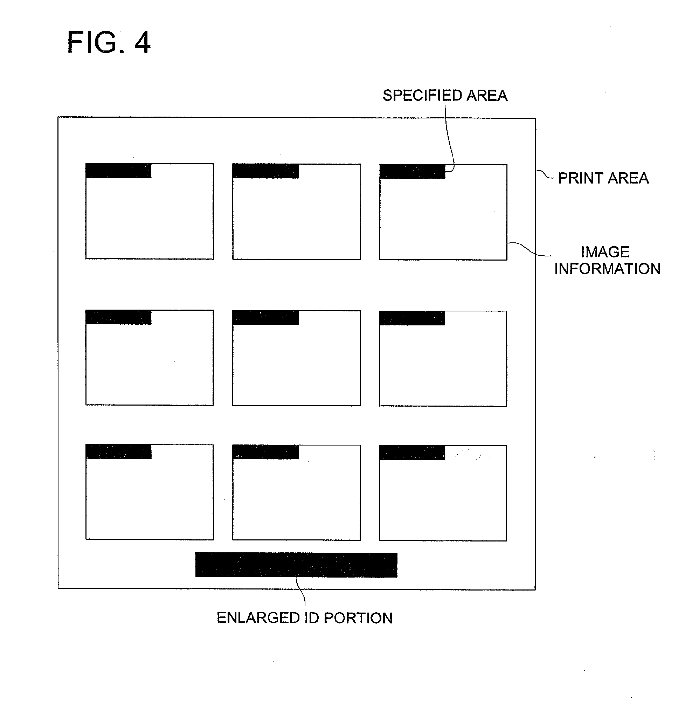

Then the operator sets the multiformat using multiple pieces of inputted image information, into the extracting section 19 from the setting section 15 (Step S302). In the multiformat, multiple pieces of image information are arranged in one print area for each frame. This print area is printed on the 14" x 17" film sheet, and multiple pieces of image information are displayed on the film in a list visualized at once. Fig. 4 is a diagram illustrating an example of formatted image information. In Fig. 4, image information is arranged in nine frames arranged in a 3 x 3 matrix. In this case, the setting section 15 sets the type and other information of the film for printing the number of the pieces of image information shown in a list visualized at once, layout position and print area.

In the example given in Fig. 4, the specified area contained in the image information is illustrated on the top left corner of image information. In this list, image information is displayed in a reduced scale, and the radiograph-related information described as a character on the specified area appears very small. The operator will find it very difficult to identify.

To solve this problem, the print area is provided with an enlarged ID portion for enlarged display of the radiograph-related information. This enlarged ID portion is located at the border portion of the print area, which is a peripheral area where image information is not present. By the arrangement, it can be easy to identify the radiograph-related information of reduced size contained in the image information of the print area. It should be noted that the enlarged ID portion can be set at a desired position of the border portion by the setting section 15. The enlargement ratio of radiograph-related information displayed at the same time is also set.

The setting section 15 has a density reversing section to provide reverse display of the radiograph-related information of the enlarged ID portion in conformity to the conditions of the background image of the border portion. This density reversing section upgrades the radiograph-related information of the enlarged ID portion to become sharp image information.

The processing apparatus 13 ensures that the multi-formatted information set by the setting section 15 is sent to the laser imager 14. Based on this multi-formatted information, the laser imager 14 edits and prints the image information.

Referring back to Fig. 2, the extracting section 19 uses the area extracting section 17 to settle the specified area of the image information containing the radiograph-related information, based on the position information from the medical image diagnostic apparatus 11 or setting section 15 (Step S303).

After that, the extracting section 19 picks up radiograph-related information of the specified area from all image information contained in the print area (Step S304). Processing of calculation to be described later is then applied to the radiograph-related information in the specified area (Step S305). This processing permits the character image containing little noise or background image to be extracted from the radiograph-related information of the specified area. The radiograph-related information consisting of this character image is outputted to the laser imager 14 as an image displayed on the enlarged ID portion (Step S306).

The following describes the radiograph-related information of the specified area obtained in (Step S304) before processing of calculation for extracting the character image from the radiograph-related information of the specified area is explained. This radiograph-related information is represented by a string of character that forms part of the specified area shown in Fig. 3 (B), for example.

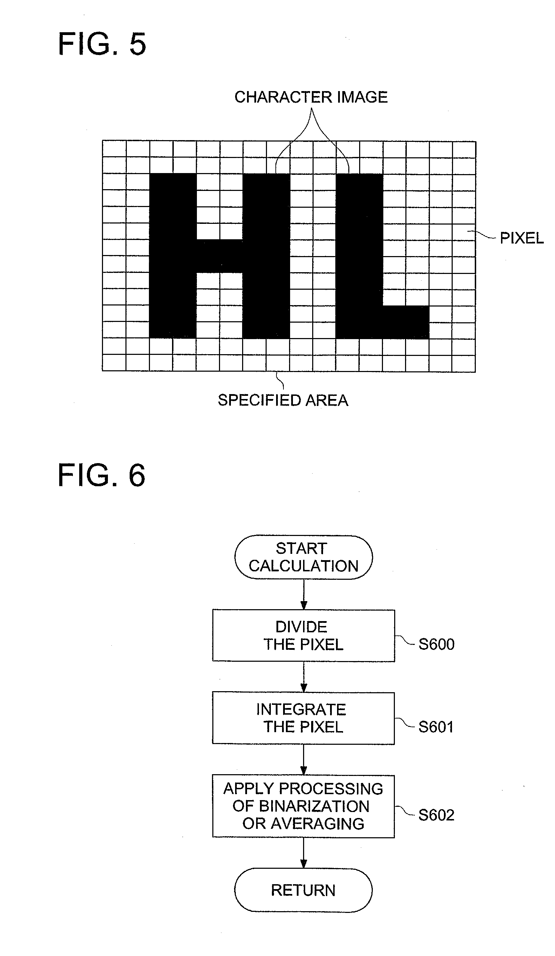

Fig. 5 is a diagram illustrating a representative example of a string of character images in the specified area. This specified area consists of a pixel matrix of rectangular shape, for example. A plurality of character images representing the shape of a character are arranged in a pixel matrix, and they form a string of characters. Although not shown in Fig. 5, the character image is displayed on the tomographic image as a background, and is not clearly visible, depending on the type of the background. A special character such as a reversed character or shaded character is utilized, as required.

The tomographic image information as a background contains a wide variety of noise at the time of image capturing as a background. The noise is superimposed on the specified area. Such noise ((not illustrated) is contained in the portion other than the character image in the specified area shown in Fig. 5. For the specified area or the string of characters extracted from the specified area, the position in the area may deviate for each pixel due to scanning errors.

Accordingly, when radiograph-related information is outputted as an image displayed on the enlarged ID portion in Step S306, noise may be superimposed if the radiograph-related information in the string of characters acquired in Step S304 is used directly without undergoing the processing of calculation. This may result in difficulties in identification. Especially in the enlarged ID portion as an enlarged display area, the specified area is displayed in the enlarged size, and the character image portion as well as noise contained in the radiograph-related information are enhanced. This will further increase the reading difficulties.

Referring to the Fig. 6, the following describes the processing of calculation in Step S305. Fig. 6 is a flowchart showing the operation of extracting a character image from the radiograph-related information of the specified area, using a calculating section 18. In the calculating section 18, the resolution of the radiograph-related information pertaining to the radiograph-related information of the specified area for each of the frames acquired in Step S304 is improved by division of pixels or other method (Step S600). This ensures processing of higher-precision calculation. For the pixels of radiograph-related information, integration is carried out among the pixels present at the same position, using the radiograph-related information of each frame (Step S601). In this case, the number of frames shown in a list visualized at once of the print area or a smaller number is specified in advance as the number of frames to be integrated. This integration enhances the character image portion contained commonly in the specified area of each frame, with the result that the level of the noise and background or the number of special characters contained only in a specific frame will be reduced. Further, when the character image portion of the specified area deviates for each pixel due to scanning errors, the major overlapping character image portion is enhanced.

Then the extracting section 19 applies processing of binarization or averaging to the image information of the integrated character string (Step S602). The character image commonly contained in the character string is basically a binary image; further, a high pixel value is given to the character image by the integration of Step S601. Accordingly, a threshold value is provided, and the character image of the integrated character string is converted into binary data, whereby only the major character image portion is extracted easily.

Noise or background image contained in the specific frame is suppressed by averaging the character image contained commonly in the character string using an integration numeral, with the result that only the major character image portion commonly contained in all frames is extracted easily.

As described above, in the first embodiment, integration, or averaging or binarization following the step of integration is performed based on the radiograph-related information, commonly contained in all frames, of multiple pieces of multi-formatted image information so that there will be little influence of noise and background image contained in some of the frames, and special character. Moreover, when the character image deviates for each pixel at the time of scanning, the major character image portion is extracted, and this character image portion is displayed as new radiograph-related information on the enlarged ID portion of multi-formatted display. Accordingly, the accurate and easy-to-see character image representing the radiograph-related information can be displayed on the enlarged ID portion, without character recognition of the character image.

### (EMBODIMENT 2)

In the Embodiment 1, the character image is extracted by integration, or averaging or binarization following the step of integration based on the radiograph-related information of the specified area. Comparative calculation of radiograph-related information of each frame also permits extraction of accurate character image commonly contained, for example. Thus, the following describes the present Embodiment 2 where the accurate character image is extracted by comparative calculation of radiograph-related information of each frame.

In the radiograph-related information of the specified area for each frame shown in Fig. 4, noise, background image or special character image is superimposed on some of the frames, and the majority of the frames without noise, background image or special character image imposed thereon is considered to have accurate image information. Thus, the majority of the image information can be regarded as accurate image information by comparison of the radiograph-related information of each frame.

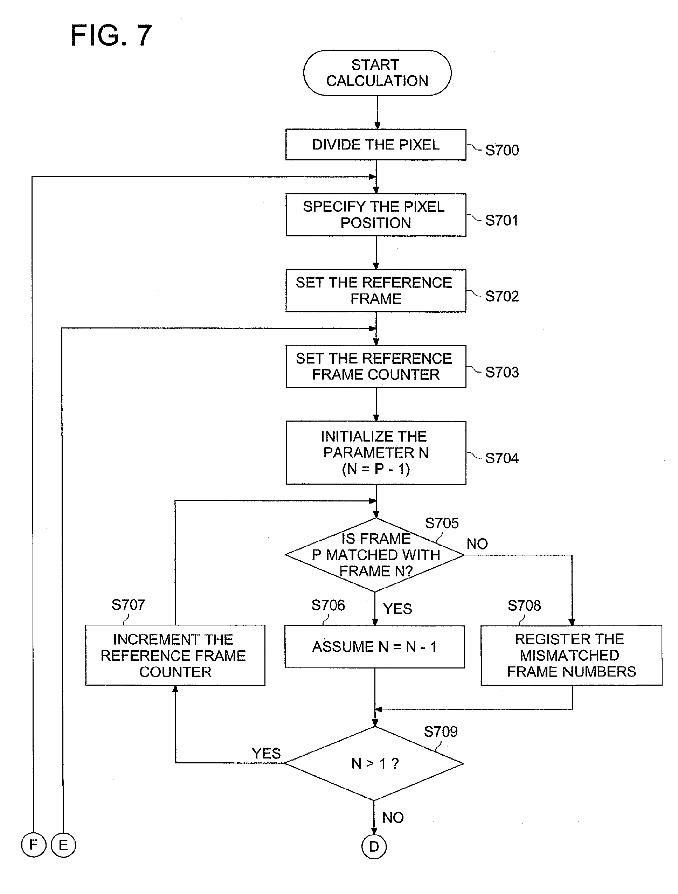

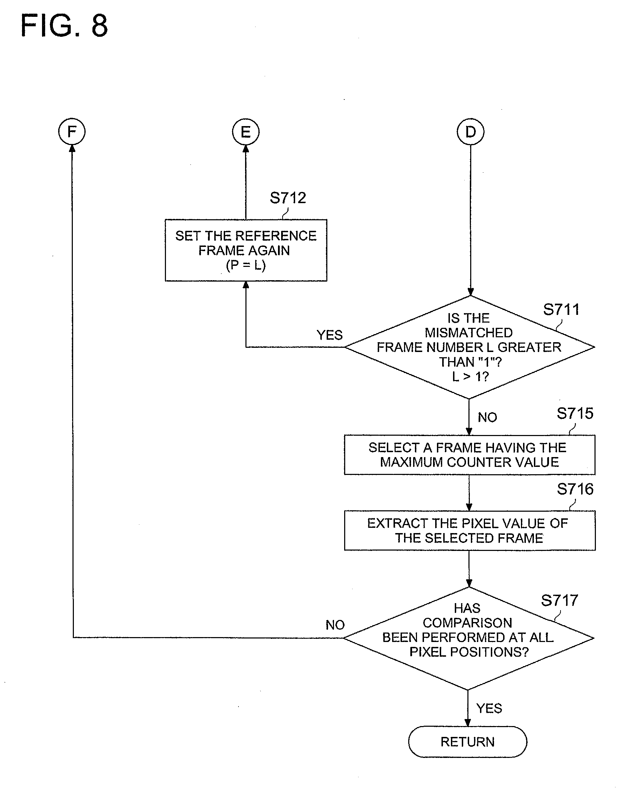

Figs. 7 and 8 are the flowcharts representing the operations of the calculation section 18 in the Embodiment 2 based on the concept. The calculating section 18 corresponds to that shown in Fig. 1. Otherwise, the configuration is identically the same as that shown in Fig. 1, and will not be described.

The flowcharts of Figs. 7 and 8 correspond to processing of calculation in Step S305 in the operation of the extracting section 19 of Fig. 2. Other operations are identically the same as those shown in the flowchart of Fig. 2, and will not be described.

Based on the radiograph-related information in a plurality of specified areas, the extracting section 19 shown in Fig. 4 extracts accurate character image through comparative calculation. In the step of this comparative calculation, the radiograph-related information of a plurality of frames acquired in Step S304 is compared for each pixel.

Each frame displayed in the tabulated list is assigned with a number. This number represents the image information and pixel displayed on the frame. Further, the number of frames displayed in the tabulated list is assumed as "M". In the example of Fig. 4, M = 9. The parameter representing the radiograph-related information number at the time of comparison is assumed as "P". "N" is assumed to represent the parameter for the number of the frame used for comparison.

In the calculating section 18, the resolution of the radiograph-related information pertaining to the specified area for each frame acquired in Step S304 is improved by image division and other means (Step S700). This step ensures higher-precision processing of calculation to be described later (Step S701).

After that, in the calculating section 18, the parameter P of the reference frame representing the first radiograph-related information in the step of comparison is set to the M-th frame (Step S702). Further, the counter having an initial value of zero (0) corresponding to the reference frame is set to the first radiograph-related information (Step S703).

After that, the calculating section 18 assigns the number of the frame for comparison to the parameter N sequentially and makes comparison. In the first place, "P-1" is substituted into the parameter N (Step S704). Comparison is made between the first radiograph-related information and the relevant frame to determine if image values are matched or not (Step S705). If a match has been found out (Yes in Step S705), the counter of the radiograph-related information set in Step S703 is incremented (Step S706). If no match has been found out (No in Step S705), the mismatched frame numbers are sequentially registered on the mismatch file (Step S708).

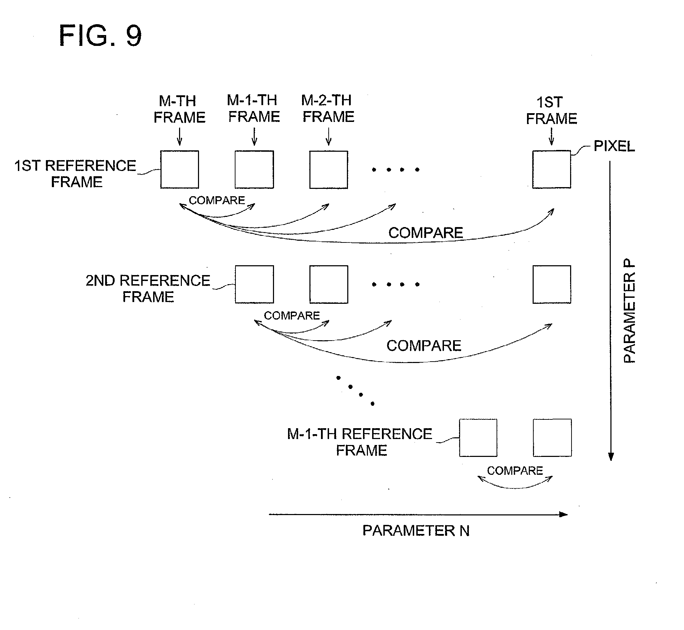

After that, the calculating section 18 compares all the relevant frames by determining if the parameter N exceeds "1" or not (Step S707). If it does (Yes in Step S707), "N-1" is substituted into parameter N (Step S707). The frame for comparison is shifted to the frame of a lower number, and the comparison of Step S705 is repeated. If the parameter N does not exceed "1" (No in Step S707), comparison has already been completed, and therefore the next radiograph-related information is shifted to the step for change. Fig. 9 schematically shows this comparative calculation. The pixels of the M-th frame as the first radiograph-related information are sequentially compared with those of the frame having a lower number than M-th frame.

Then the calculating section 18 changes the radiograph-related information and shifts to the process of changing the settings of the parameter P of radiograph-related information in order to perform comparison again. In this case, a new reference frame is selected from among the frames where the result of mismatch has been obtained in the comparison with radiograph-related information, according to the decision made in Step S705. The maximum frame number out of the frame numbers in the mismatch file obtained in Step S708 is assumed as "L", and decision is made to see if "L" exceeds "1" or not (Step S711).

If "L" has exceeded "1" (No in Step S711), "L" is substituted into the parameter P of radiograph-related information (Step S712). With the L-th frame assumed as the reference frame of the second radiograph-related information, the control shifts to the Step S703, and processing of comparative calculation of Steps S703 through 709 is applied to the second radiograph-related information. While "L" exceeds 1, the third and fourth new reference frames are selected sequentially, and these new reference frames are subjected to comparative calculation.

In the registration into the mismatch file carried out in Step S708 in response to the occurrence of mismatching, a new mismatch file is generated, and arrangement is so made as to re-register only the frame having the number registered into the mismatch file using the radiograph-related information. Because of this arrangement, the new mismatch file allows registration of only the number of the frame where mismatching occurs when any one of the radiograph-related information items is used.

The example illustrated in Fig. 9 shows the comparative calculation to be carried out sequentially when mismatching occurs to the pixels of all the frames. The first through M-1-th radiograph-related information items are moved sequentially from a high frame number to a low frame number, and processing of comparison is applied to the frame having a lower number than that of radiograph-related information. Comparison is performed for all the frames. For example, when M-th radiograph-related information and M-1-th frame are matched with each other, comparison using M-1-th radiograph-related information is not necessary, and therefore is not performed.

When "L" does not exceed "1" (Yes in Step S711), there is no frame to be compared, so the control shifts to the next step.

Since all the comparison has been completed, the calculating section 18 searches the radiograph-related information counter to select the one having the maximum counter value (Step S715). This counter value the pixel value of radiograph-related information having the maximum counter value is used as the pixel value at the pixel position specified in Step S701 (Step S716).

After that, the calculating section 18 determines if comparative calculation has been performed for each frame at all the pixel positions of the specified area (Step S717). If, at all pixel positions, comparative calculation has not been performed (No in Step S717), the control shifts to Step S701, and a new pixel position not yet been compared is specified. A pixel value is determined by comparative calculation performed according to Steps S702 through S716. When comparative calculation has been made at all pixel positions (Yes Step S717), the accurate pixel value forming part of the character image at all pixel positions of the specified area is determined. Then the processing of calculation terminates to go to Step S306 shown in Fig. 2. Thus, new radiograph-related information of accurate character image is outputted.

As described above, in Embodiment 2, for all the pixels of the radiograph-related information contained in the specified area, all the pixel values are compared for each frame to select the greatest number of pixels having the common pixel value. These pixels are used as those of the accurate character image to generate new radiograph-related information. Accordingly, there is little influence of noise, background image or special character that are contained in some of the radiograph-related information items or frames. Further, when the character image deviates for each pixel at the time of scanning, the major character image portion is extracted. When this radiograph-related information is displayed in an enlarges size on the enlarged ID portion of multi-formatted display, the accurate and easy-to-see character image representing the radiograph-related information can be displayed on the enlarged ID portion, without character recognition of the character image.

In the processing of calculation according to Embodiment 2, all the pixel values at the pixel position specified at the specified position are compared for each frame, and the maximum out of the counter values for each of radiograph-related information items having a different image value is used as the accurate pixel value. It is also possible to provide a threshold value, and to arrange such a configuration that the counter value exceeding the threshold value is generally regarded as the maximum value, and the pixel value of the relevant radiograph-related information is used as an accurate pixel value. In the example of the flowchart given in Fig. 7, when the radiograph-related information counter in Step S706 has exceeded the threshold value, control is shifted to Step S716, and the pixel value of this radiograph-related information is extracted as the correct value of character image. This threshold value has a value smaller than the number of the frames. This arrangement ensures that the processing of calculation shown in Fig. 7 is simple and convenient.

### [EFFECTS OF THE INVENTION]

The arrangement of the invention makes it possible to extract new radiograph-related information least affected by noise or background image, without recourse to a method for character recognition using character dictionary or the like for radiograph-related information. This, in turn, allows the new radiograph-related information to be displayed in an enlarge form, thereby ensuring easy identification by the operator.

The arrangement of the invention ensures efficient extraction of radiograph-related information from the specified area of the image information specified by the medical image radiographing apparatus.

The arrangement of the invention ensures efficient extraction of the radiograph-related information from the specific area of the image information specified by the extracting section.

The arrangement of the invention allows radiograph-related information of an easy-to-see size to be displayed a clearly visible position.

The arrangement of the invention permits high-precision acquisition of radiograph-related information by improving the resolution of the area where the radiograph-related information is present.

The arrangement of the invention enhances the radiograph-related information commonly contained in image information and reduces the noise or background image not commonly contained in image information.

The arrangement of the invention is able to reduce the influence of the noise and other factors contained in the specific radiograph-related information in multiple pieces of radiograph-related information by using the method of averaging

The arrangement of the invention is able to picks up only the binarized image portion from the enhanced radiograph-related information using the method of binarization.

The arrangement of the invention is able to reduce the noise or background image of the new radiograph-related information and improves its accuracy.

The arrangement of the invention is able to determines match or mismatch of pixels by using calculation of comparison.

Thus, a match is found among the pixels containing common radiograph-related information while a mismatch is found among the pixels containing noise or background image. This makes it easy to differentiate between them.

The arrangement of the invention applies comparison in all combinations of radiograph-related information. This arrangement permits the matched pixels to be counted for each mismatched pixel.

The arrangement of the invention allows all possible combinations of radiograph-related information items to be implemented exhaustively with high efficiency.

The arrangement of the invention allows all possible combinations of radiograph-related information items to be implemented quickly and efficiently without wasting time.

According to the arrangement of the invention, the pixels containing the greatest number of matched pixels among the mismatched pixels are the pixels of the new radiograph-related information. Thus, the pixels having the highest possibility of being contained commonly in multiple pieces of image information can be made the pixels of the new radiograph-related information.

The arrangement of the invention ensures that the pixels for getting new radiograph-related information can be determined out of the pixels that are easily matched, without comparison being made for all combinations of radiograph-related information.

The arrangement of the invention is able to reverse the density when the new radiograph-related information is to be outputted. This arrangement allows an operator to select an easy-to-see density in conformity to the status of display by using a density reversing section

According to the arrangement of the invention, either the image processing apparatus (processor) or image outputting apparatus (imager) is provided with an extracting section. This arrangement ensures that the radiograph-related information commonly contained in the image information can be displayed on the recording medium where prints are outputted, accurately in the form that permits easy identification.

The arrangement of the invention ensures that radiograph-related information of easy-to-see size can be displayed at a conspicuous density at the clearly visible position of the recording medium without interfering the image information.

According to the arrangement of the invention, the imager has a visualization section, and either the imager or processing apparatus (processer) has an extracting section, calculating section and setting section. This arrangement ensures that the radiograph-related information commonly contained in the image information can be displayed on the recording medium where prints are outputted, accurately in the form that permits easy identification.

According to the arrangement of the invention, either the imager or processing apparatus is provided with a setting section and density reversing section. This arrangement ensures that radiograph-related information of easy-to-see size can be displayed at a conspicuous density at the clearly visible position of the recording medium without interfering the image information.

## Claims

1. A medical image processing system for visualizing plural medical images of a subject in multi-format on a single image plane on one of a film sheet and a screen, comprising:
a radiographing section for radiographing the subject so as to generate plural sets of image information in which each set of image information includes medical image information and radiograph-related information related to at least one of the subject and the radiographing section;
an extracting section for extracting plural sets of radiograph-related information from the plural sets of image information;
a calculating section for conducting calculation for the plural sets of radiograph-related information so as to obtain new radiograph-related information; and
a visualizing section for visualizing the plural sets of image information with the new radiograph-related information on the single image plane.

2. The medical image processing system of claim 1, wherein the new radiograph-related information is visualized at a specified position in an enlarge form.

3. The medical image processing system of claim 1, wherein the radiographing section comprises a position information generating device for generating the position information which specifies the position of the radiograph-related information in the image information, and the extracting section extracts the radiograph-related information based on the position information.

4. The medical image processing system of claim 1, further comprising:
a setting section for setting the layout position for visualization of the radiograph-related information.

5. The medical image processing system of claim 1, wherein the calculating section divides the pixels in the area where the radiograph-related information is present.

6. The medical image processing system of claim 1, wherein the calculation conducted by the calculating section comprises integration of the pixels at the same position pertaining to the plural sets of radiograph-related information.

7. The medical image processing system of claim 6, wherein the calculation comprises processing of averaging based on the numeral of the integration, subsequent to the integration.

8. The medical image processing system of claim 6, wherein the calculation comprises processing of binarization, subsequent to the integration.

9. The medical image processing system of claim 6, wherein the calculation comprises comparing to determine match or mismatch of pixels in the same position pertaining to the plural sets of radiograph-related information.

10. The medical image processing system of claim 9, wherein the comparing in the calculation carries out processing of comparing the pixels in the radiograph-related information based on combinations of the plural sets of radiograph-related information.

11. The medical image processing system of claim 10,
wherein the combinations are decided by the steps of:
selecting the first radiograph-related information from the plural sets of radiograph-related information;
comparing pixels between the first radiograph-related information and the radiograph-related information other than first radiograph-related information;
selecting the second radiograph-related information from the second radiograph-related information and information other than the first radiograph-related information;
comparing pixels between this information and the radiograph-related information other than the first and second radiograph-related information;
selecting N-th radiograph-related information from the radiograph-related information other than the first and N-1-th radiograph-related information, wherein N is assumed as a parameter of natural number in excess of 2; and
comparing pixels between this information and the radiograph-related information other than 1st through N-th radiograph-related information in sequentially repeatedly until N-1 becomes equal to the number of the radiograph-related information items.

12. The medical image processing system of claim 11, wherein the comparing which use the N-th radiograph-related information is not carried out in the combinations, if there is a match between the N-th radiograph-related information and N-1-th radiograph-related information.

13. The medical image processing system of claim 12, wherein the extracting section ensures that the pixels containing the greatest number of matched pixels among the mismatched pixels as a result of the calculation of comparing are the pixels of the new radiograph-related information.

14. The medical image processing system of claim 9, wherein the extracting section ensures that, when the number of the matched pixels has exceeded the threshold value, these pixels are those of the new radiograph-related information.

15. The medical image processing system of claim 1, further comprising:
a density reversing section for reversing the density of the new radiograph-related information on the plane.

16. The medical image processing system of claim 1, further comprising:
a setting section for setting the layout position for visualization of the radiograph-related information; and
a density reversing section for reversing the density of the new radiograph-related information on the plane.

17. The medical image processing system of claim 1, wherein the extracting section, the calculating section and visualizing section are comprised in an imager that prints the image information on the film sheet.

18. The medical image processing system of claim 16, wherein the extracting section, the calculating section, the visualizing section, the setting section and the density reversing section are comprised in an imager that prints the image information on the film sheet.

19. The medical image processing system of claim 4, wherein the visualizing section is comprised in an imager that prints the image information on the film, wherein the extracting section, the calculating section, the visualizing section and setting section are comprised in one of the imager and a processor that process the image information.

20. The medical image processing system of claim 19, wherein the imager or the processor comprises the setting section and a density reversing section for reversing the density of the new radiograph-related information on the film sheet.

21. A medical image processing method for visualizing plural medical images of a subject in multi-format on a single image plane on one of a film sheet and a screen, comprising the steps of:
radiographing the subject so as to generate plural sets of image information in which each set of image information includes medical image information and radiograph-related information related to at least one of the subject and a radiographing section for radiographing;
extracting plural sets of radiograph-related information from the plural sets of image information;
conducting calculation for the plural sets of radiograph-related information so as to obtain new radiograph-related information; and
visualizing the plural sets of image information with the new radiograph-related information on the single image plane.

22. The medical image processing method of claim 21, wherein the new radiograph-related information is visualized at a specified position in an enlarge form.

23. The medical image processing method of claim 21,
wherein the step of radiographing comprises:
generating the position information which specifies the position of the radiograph-related information in the image information,
wherein the step of extracting comprises:
extracting the radiograph-related information based on the position information.

24. The medical image processing method of claim 21, further comprising the step of:
setting a layout position for visualization of the radiograph-related information.

25. The medical image processing method of claim 21,
wherein the step of calculating comprising:
dividing the pixels in the area where the radiograph-related information is present.

26. The medical image processing method of claim 21, wherein the calculation conducted by the calculating comprises integration of the pixels at the same position pertaining to the plural sets of radiograph-related information.

27. The medical image processing method of claim 26, wherein the calculation comprises processing of averaging based on the numeral of the integration, subsequent to the integration.

28. The medical image processing method of claim 26, wherein the calculation comprises processing of binarization, subsequent to the integration.

29. The medical image processing method of claim 26, wherein the calculation comprises comparing to determine match or mismatch of pixels in the same position pertaining to the plural sets of radiograph-related information.

30. The medical image processing method of claim 29, wherein the comparing in the calculation carries out processing of comparing the pixels in the radiograph-related information based on combinations of the plural sets of radiograph-related information.

31. The medical image processing method of claim 30, wherein the combinations are decided by the steps of:
selecting the first radiograph-related information from the plural sets of radiograph-related information;
comparing pixels between the first radiograph-related information and the radiograph-related information other than first radiograph-related information;
selecting the second radiograph-related information from the second radiograph-related information and information other than the first radiograph-related information;
comparing pixels between this information and the radiograph-related information other than the first and second radiograph-related information;
selecting N-th radiograph-related information from the radiograph-related information other than the first and N-1-th radiograph-related information, wherein N is assumed as a parameter of natural number in excess of 2; and
comparing pixels between this information and the radiograph-related information other than 1st through N-th radiograph-related information in sequentially repeatedly until N-1 becomes equal to the number of the radiograph-related information items.

32. The medical image processing method of claim 31, wherein the comparing which use the N-th radiograph-related information is not carried out in the combinations, if there is a match between the N-th radiograph-related information and N-1-th radiograph-related information.

33. The medical image processing method of claim 32, wherein the step of extracting ensures that the pixels containing the greatest number of matched pixels among the mismatched pixels as a result of the calculation of comparing are the pixels of the new radiograph-related information.

34. The medical image processing method of claim 39, wherein the step of extracting ensures that, when the number of the matched pixels has exceeded the threshold value, these pixels are those of the new radiograph-related information.

35. The medical image processing method of claim 21, further comprising the step of:
density reversing for reversing the density of the new radiograph-related information on the plane.

36. The medical image processing method of claim 21, further comprising the steps of:
setting a layout position for visualization of the radiograph-related information; and
density reversing for reversing the density of the new radiograph-related information on the plane.
